# EUROPÄISCHE PATENTSCHRIFT

(11) **EP 3 662 238 B1**
(45) Veröffentlichungstag und Bekanntmachung des Hinweises auf die Patenterteilung: **10.06.2026**
(21) Anmeldenummer: 18759242.3
(22) Anmeldetag: 10.07.2018
(51) Int. Cl.: G01J 1/04, G01J 1/42, G01J 5/00, G01J 5/02, G01J 5/08, G02B 6/42

(54) **OPTISCHE DETEKTORVORRICHTUNG**
OPTICAL DETECTOR DEVICE
DISPOSITIF DÉTECTEUR OPTIQUE

(30) Priorität: 01.08.2017 DE 102017007176
(43) Veröffentlichungstag der Anmeldung: 10.06.2020
(73) Patentinhaber: Fagus-GreCon Greten GmbH & Co. KG, 31061 Alfeld (DE)
(72) Erfinder: LOMMATZSCH, Thomas, 31028 Gronau (DE)
(74) Vertreter: Rieke, Andreas
(86) Internationale Anmeldenummer: PCT/DE2018/000209
(87) Internationale Veröffentlichungsnummer: WO 2019/024953

(56) Entgegenhaltungen:
- DE-A1- 102009 002 751
- DE-A1- 102014 212 508
- DE-U1- 202013 006 142
- DE-U1- 202013 006 142
- US-A- 6 135 760

## Beschreibung

Die Erfindung betrifft eine optische Detektorvorrichtung, die ein Gehäuse mit einem vorstehenden Stutzen aufweist, der nach außen von einer lichtdurchlässigen Scheibe abgeschlossen wird, unter der wenigstens ein sich hin zu einem optischen Sensor verjüngender Lichtleiter angeordnet ist.

Eine derartige Vorrichtung für das Erkennen von Funken-, Brand- und Glutnestern innerhalb eines Materialstroms ist aus der DE 20 2013 006 142 U1 bekannt. Bei dem dort dargestellten Ausführungsbeispiel ist eine zylindrische Umhüllung eines geeignet beschichteten Lichtleiters in dem Stutzen des Gehäuses aufgenommen und verjüngt sich dieser Lichtleiter hin zu einem optischen Sensor auf einen Querschnitt, der der aktiven Fläche des Sensors, einem fotosensiblen Element, entspricht.

Als problematisch hat sich bei dieser Vorrichtung die Überwachung des gesamten Spektrums, unter dem hier der gesamte Bereich vom Infrarot bis hin zum Ultraviolett verstanden wird, mit nur einen Sensor erwiesen. Vor diesem Hintergrund macht die Erfindung es sich zur Aufgabe, eine optische Detektorvorrichtung zur Verfügung zu stellen, mit der eine hochpräzise Vermessung des ganzen Spektrums ermöglicht ist.

Gelöst wird diese technische Problematik bei einer gattungsgemäßen Detektorvorrichtung durch die Merkmale des Anspruchs 1. Aufgrund dieser Merkmale bietet die erfindungsgemäße Detektorvorrichtung eine Vielzahl von Vorteilen.

Erfindungsgemäß ist eine einstückig ausgebildete Lichtleiteranordnung mit mehreren, z.B. mit zwei oder drei, Lichtleitern vorgesehen, so dass Sensoren unterschiedlicher Kennlinien Verwendung finden können. Damit kann eine Überhitzung und können insbesondere Funken oder dergleichen innerhalb des Materialstroms deutlich verbessert detektiert werden.

Für den Halt und die Positionierung der Lichtleiteranordnung mit den Lichtleitern innerhalb des Stutzens, der die Wand eines den Materialstrom begrenzenden Rohrs durchsetzt, ist eine bevorzugt einstückig ausgebildete Haltevorrichtung vorgesehen.

Die Haltevorrichtung wird, beispielsweise durch vorhergesehene Nuten und Federn, verdrehsicher in den Stutzen eingebracht und ist damit exakt ausgerichtet. Unter der Scheibe liegt erfindungsgemäß auf der Haltvorrichtung ein Ring der Lichtleiteranordnung, an dem die Lichtleiter radial außen liegend angeschlossen sind.

Da die Haltvorrichtung verdrehsicher in dem Stutzen aufgenommen ist und weiter auch die Lichtleiteranordnung verdrehsicher und eindeutig in der Haltevorrichtung gefangen ist, werden die Lichtleiter exakt über jeweils einem Sensor positioniert.

Damit die Haltevorrichtung die Lichtleiter passgenau einfasst, wird erfindungsgemäß jeder Lichtleiter von Anlageflächen von Ausnehmungen der Haltevorrichtung in Umfangrichtung und radial innen passgenau eingefasst und gegen die Innenwand des Stutzens über dessen axiale Länge gehalten.

Bei der optischen Detektorvorrichtung nach der Erfindung kann weiter vorgesehen sein, dass der Ring durch einen zentralen, bevorzugt sich hin zu einem optischen Sensor konisch verjüngenden Lichtleiter geschlossen ist.

Damit besteht die Möglichkeit, unterschiedliche optische Sensoren gleichzeitig und innerhalb eines Gehäuses mit einem Signal zu beaufschlagen, wobei die exakte Positionierung der Lichtleiter über den Sensoren vorgegeben wird.

In konstruktiver Ausgestaltung ist weiter vorgesehen, dass zumindest die Anlageflächen der Haltevorrichtung an den Lichtleitern reflektierend ausgebildet sind. Damit werden Reflektionen der Lichtleiter innerhalb des Stutzens untereinander weitestgehend ausgeschlossen.

Unterhalb der Haltevorrichtung stehen die Lichtleiter geringfügig vor, was jedoch kaum störend ist, da in Weiterbildung vorgesehen ist, dass die Haltevorrichtung einen die Einbringtiefe in den Stutzen begrenzenden Bund aufweist, dass der Bund auf einer Aufnahme auf einer Platine aufsitzt und dass die Aufnahme Ausnehmungen aufweist, in denen Sensoren oder Strahler angeordnet sind. Ist in den Ausnehmungen jeweils ein Sensor angeordnet, so greifen die Überstände der Lichtleiter in diese Ausnehmungen ein und es kommt auch dort zu keinen wechselseitigen Störungen.

Dies in keinem Fall, wenn dem Bund unterseitig die Lichtleiter einfassende, rohrartige Umhüllungen vorstehen. Damit verbleibt lediglich eine Lichtaustrittsöffnung senkrecht zur axialen Erstreckung des Stutzens.

In weiterer Ausgestaltung können der Aufnahme unterseitige Zapfen vorstehen, die in Ausnehmungen der eine Auswerteelektronik aufweisenden Platine eingreifen. Damit sind die Aufnahme und die Halterung mit der Lichtleiteranordnung radial wie axial exakt und vorherbestimmbar zueinander ausgerichtet.

Bei einer zweiten Variante der Detektorvorrichtung ist vorgesehen, dass die Aufnahme einen Zylinder aufweist, der zentral die Haltevorrichtung durchsetzt, wobei insbesondere der offene Ring und der Schaft gleiche Innendurchmesser aufweisen, und dass von dem Zylinder ein Sensor unmittelbar unter der Scheibe gehalten wird.

Dies ist insbesondere bei Sensoren einer großen aktiven Fläche zweckmäßig.

Mittels der Sensoren werden die optischen Eigenschaften des Materialstroms passiv vermessen. Einer aktiven Vermessung dienen Strahler, die ebenfalls in Ausnehmungen der Aufnahme oder auch daneben angeordnet sein können. Für die Abstrahlung beispielsweise eines UV-Lichtes ist dann weiter vorgesehen, dass die Haltevorrichtung einen zu dem Stutzen achsparallelen Kanal über einem Strahler ausbildet. Aus fertigungstechnischen Gründen ist dieser Kanal bevorzugt radial außen der Haltevorrichtung angeordnet und hin zu der Innenwand des Stutzens mit einem Schlitz versehen.

Durch die Detektorvorrichtung nach der Erfindung kann so durch die Verwendung mehrerer Sensoren und/oder Strahler das Spektrum vom Infrarot bis Ultraviolett überwacht werden.

Das Wesen der Erfindung wird anhand der Zeichnung näher erläutert, in der lediglich Ausführungsbeispiele dargestellt sind. In der Zeichnung zeigt:
- Fig. 1:: einen schematischen und unmaßstäblichen Schnitt durch eine Detektorvorrichtung nach der Erfindung,
- Fig. 2:: eine Seitenansicht einer Lichtleiteranordnung mit zwei an einen Ring angeschlossenen Lichtleitern,
- Fig. 3:: eine Draufsicht,
- Fig. 4:: eine Seitenansicht einer zugehörigen Haltevorrichtung,
- Fig. 5:: eine Draufsicht,
- Fig. 6:: eine Seitenansicht einer zugehörigen Aufnahme,
- Fig. 7:: eine Draufsicht,
- Fig. 8:: in einer Seitenansicht eine weitere Lichtleiteranordnung,
- Fig. 9:: eine Draufsicht,
- Fig. 10:: eine seitliche Darstellung einer zugehörigen Haltevorrichtung,
- Fig. 11:: eine Draufsicht,
- Fig. 12:: eine Draufsicht einer zugehörigen Aufnahme und
- Fig. 13:: eine isometrische Darstellung.

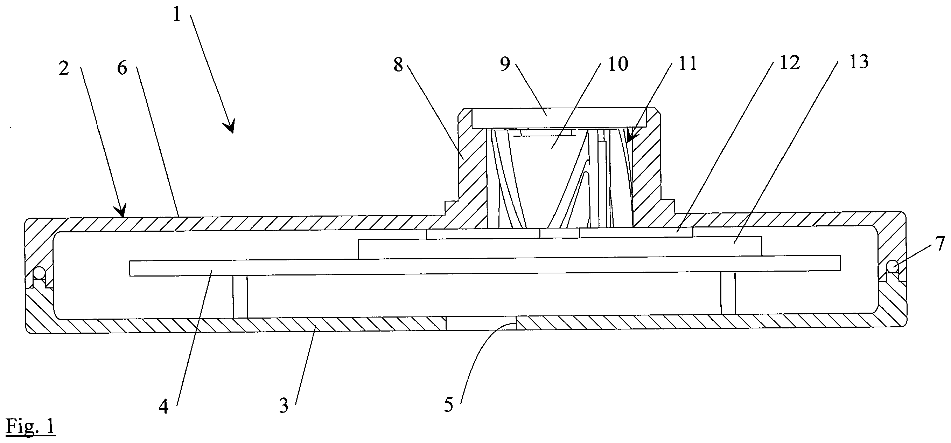

Figur 1 zeigt einen idealisierten, nicht maßstabsgerechten Schnitt durch eine optische Detektorvorrichtung 1 nach der Erfindung. Deren Gehäuse 2 ist zweischalig aufgebaut. In der Unterschale 3 ist eine Platine 4 für die Elektronik festgelegt. Deren Anschluss erfolgt durch eine Durchbrechung 5 mittels eines eingebrachten Steckkontaktes oder einem durchgeführten Kabelbaum.

Die Oberschale 6 ist mit der Unterschale 3 über einen Dichtring 7 verschraubt und weist einen vorstehenden Stutzen 8 auf, der die Wandung eines Rohres für einen Materialstrom durchsetzt. Nach außen, hin zu dem Materialstrom, ist der Stutzen 8 in an sich üblicher Weise von einer lichtdurchlässigen Scheibe 9 geschlossen.

In dem Schaft 8 wird eine Lichtleiteranordnung 10 von einer verdrehsicher in den Schaft 8 eingebrachten Haltevorrichtung 11 ebenfalls verdrehsicher und in eindeutiger Weise gehalten und exakt über der Platine 4 mit Sensoren positioniert, wie nachstehend weiter erläutert werden wird.

Die Einbringtiefe der Haltevorrichtung 11 imn den Stutzen 8 wird durch einen Bund 12 begrenzt, der seinerseits auf einer Aufnahme 13 auf der Platine 4 aufsitzt.

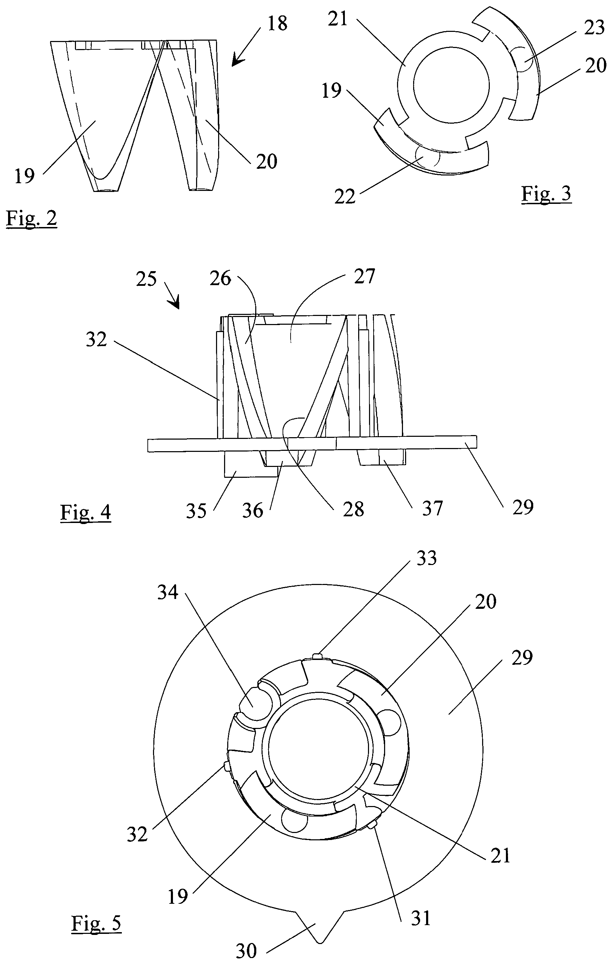

Anhand der Figuren 2 und 3 wird eine erste Ausführungsform einer Lichtleiteranordnung 18 erläutert.

Die Lichtleiteranordnung 18 weist zwei Lichtleiter 19,20 auf, die einstückig mit einem Ring 21 gefertigt und radial außenliegend mit diesem verbunden sind. Die Lichtleiter 19,20 verjüngen sich hin zu Sensoren auf der Platine 4 auf Querschnitte 22,23, die im wesentlichen der aktiven Fläche von Sensoren entsprechen.

Die Lichtleiteranordnung 18 ist innerhalb des Stutzens 8 in einer Haltevorrichtung 25 gemäß den Figuren 4 du 5 aufgrund der Anordnung der Lichtleiter 19,20 an dem Ring 21 eindeutig gefangen. Dabei schließt der Ring 21 oberseitig exakt in einer Ebene mit der Haltevorrichtung 25 ab und wird von dieser unmittelbar unter der Scheibe 9 positioniert.

Des weiteren wird jeder Lichtleiter 19,20 von Anlageflächen 26-28 von Ausnehmungen 38 der Haltevorrichtung 25 in Umfangrichtung und radial innen passgenau eingefasst und gegen die Innenwand des Stutzens 8 über dessen axiale Länge gehalten.

Die Einbringtiefe der Haltevorrichtung 25 mit der Lichtleiteranordnung 18 in den Stutzen 8 wird durch einen Bund 29 begrenzt. Der Bund 29 ist mit einer Pfeilspitze 30 versehen, die ihr Gegenstück in der Oberschale 6 findet, so dass ein leichtes, aufgrund der in Nuten des Stutzens 8 eingreifenden Federn 31-33 verdrehsicheres Einbringen der Haltevorrichtung 25 mit der Lichtleiteranordnung 18 in den Schaft 8 sichergestellt ist und damit auch eine exakte Positionierung der unteren Lichtleiterenden über entsprechenden Sensoren.

Die Draufsicht gemäß Figur 5 zeigt weiter, dass die Haltevorrichtung 25 einen Kanal 34 ausbildet, der zu dem Stutzen achsparallel und zu der Innenwand des Stutzens 8 geöffnet ist. Durch den Kanal kann ein darunterliegender Strahler seine Energie abstrahlen.

Die Seitenansicht gemäß Figur 4 zeigt unterseitig des Bundes 29 rohrartige Umhüllung von denen der Umhüllung 35 unmittelbar auf einem Strahler aufsitzen kann, so dass eine seitliche Abstrahlung weitestgehend verhindert ist. Dagegen schließen die Umhüllung 36,37 die Lichtleiter 19,20 radial nach Außen ab.

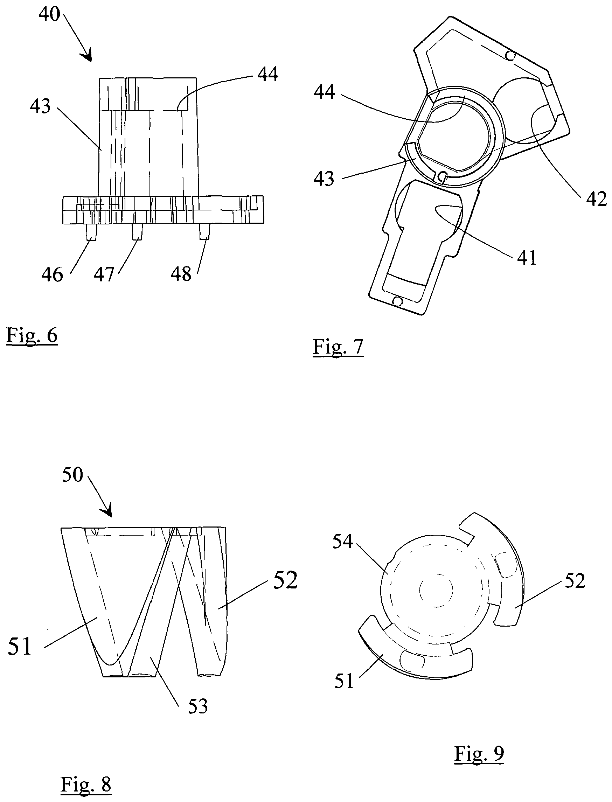

Die Haltevorrichtung 25 mit der Lichtleiteranordnung 18 sitzt unmittelbar auf einer Aufnahme 40 gemäß den Figuren 6 und 7 auf und greifen die die Lichtleiter 19,20 einfassenden Umhüllungen 36,37 in Ausnehmungen 41,42 ein und enden dort unmittelbar über weiter nicht dargestellten Sensoren. Die Umhüllung 35 endet frei über einem Strahler, wobei durch die Anordnung der lichtempfindlichen Sensoren in den Ausnehmungen 41,42 diese durch abgestrahlte Energie des Strahlers nicht beeinflusst werden.

Die Seitenansicht gemäß Figur 6 zeigt einen aufgehenden Zylinder 43 der Aufnahme 40 mit einem Ringbund 44. In den Schaft 43 kann ein nicht dargestellter Sensor eingebracht werden, der auf dem Ringbund 44 aufsitzt und durch einen Eingriff einer Nase des Sensors in einen Schlitz 45 ausgerichtet wird. Oberseitig schließt dann der Sensor unterhalb des Rings 21 ab, dessen lichte Weite dem Durchmesser der aktiven Fläche des Sensors vorzugsweise entspricht.

Unterseitig weist die Aufnahme 40 drei Zapfen 46-48 auf, die in entsprechenden Ausnehmungen der Platine 4 eingreifen. Eine exakte Positionierung der Aufnahme 40, der Haltevorrichtung 25 und der Lichtleiteranordnung 18 zueinander und zu den auf der Platine 4 angeordneten Sensoren bzw. Strahlern ist damit sichergestellt.

Anhand der Figuren 8 bis 13 wird ein weiteres Ausführungsbeispiel einer Detektorvorrichtung nach der Erfindung erläutert.

Die Lichtleiteranordnung 50 gemäß den Figuren 8 und 9 weist neben den radial außenliegenden Lichterleitern 51,52 gemäß des vorangegangenen Ausführungsbeispiels einen zentralen dritten Lichtleiter 53 auf, der sich ebenfalls hin zu einem Sensor im wesentlichen konisch verjüngt.

Der zentrale Lichtleiter 53 schließt den in Figur 9 angedeuteten Ring 54 und ist mit diesem und den beiden weiteren Lichtleitern 51,52 einstückig ausgebildet.

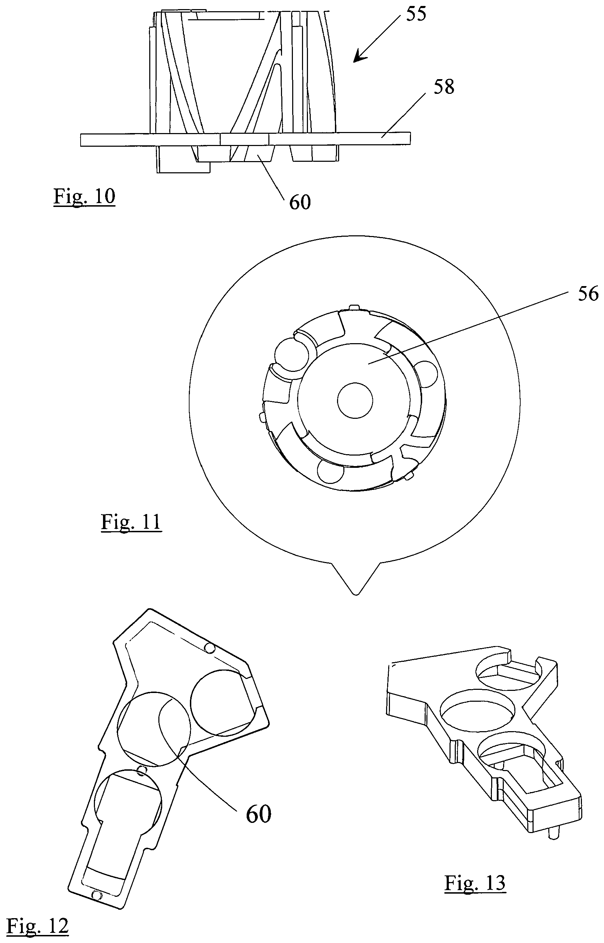

Entsprechend bildet die Haltevorrichtung 55 gemäß den Figuren 10 und 11 zentral eine trichterartige Anlagefläche 56 für den zentralen Lichtleiter 53 aus.

Damit entfällt bei der Aufnahme 57 gemäß den Figuren 12 und 13 der Zylinder des vorherigen Ausführungsbeispiels und greift die unterseitig des Bundes 58 der Haltevorrichtung 55 vorstehende, den Lichtleiter 53 einfassende rohrartige Umhüllung 59 in die Ausnehmung 60 der Aufnahme 57 ein.

In der Zeichnung ist nicht dargestellt, dass die Anlageflächen der Aufnahmen für ein Einfassen der Lichtleiter reflektierend ausgebildet sind.

## Patentansprüche

1. Optische Detektorvorrichtung (1), aufweisend ein Gehäuse (2) mit einem vorstehenden Stutzen (8), der nach außen von einer lichtdurchlässigen Scheibe (9) abgeschlossen wird, unter der eine einstückig ausgebildete Lichtleiteranordnung (18) mit mehreren Lichtleitern (19,20) angeordnet ist, die in dem Stutzen (8) von einer Haltevorrichtung (25) gehalten sind, wobei sich jeder Lichtleiter zu einem unterschiedlichen Sensor hin verjüngt und die Lichtleiteranordnung (18) einen zentralen Ring (21,54) unterhalb der Scheibe (9) aufweist, wobei der Ring (21,54) auf der Haltevorrichtung (25) aufliegt, an dem Ring (21,54) die Lichtleiter (19,20) radial außen liegend angeschlossen sind und die Haltevorrichtung die Lichtleiter passgenau einfasst, indem jeder Lichtleiter (19,20) von Anlageflächen (26-28) von Ausnehmungen (38) der Haltevorrichtung (25) in Umfangrichtung und radial innen passgenau eingefasst und gegen die Innenwand des Stutzens (8) über dessen axiale Länge gehalten wird.

2. Detektorvorrichtung nach Anspruch 1, **dadurch gekennzeichnet, dass** der Ring (54) von einem zentralen Lichtleiter (53) geschlossen ist.

3. Detektorvorrichtung nach einem oder mehreren der vorangehenden Ansprüche, **dadurch gekennzeichnet, dass** die Haltevorrichtung (25) einstückig ausgebildet ist.

4. Detektorvorrichtung nach einem oder mehreren der vorangehenden Ansprüche, **dadurch gekennzeichnet, dass** die Haltevorrichtung (25) in dem Stutzen (8) verdrehsicher und eindeutig eingebracht ist und dass die Lichtleiteranordnung (18) verdrehsicher und eindeutig in der Haltevorrichtung (25) gefangen ist.

5. Detektorvorrichtung nach einem oder mehreren der vorangehenden Ansprüche, **dadurch gekennzeichnet, dass** zumindest Anlageflächen der Haltevorrichtung an den Lichtleitern reflektierend ausgebildet sind.

6. Detektorvorrichtung nach einem oder mehreren der vorangehenden Ansprüche, **dadurch gekennzeichnet, dass** die Haltevorrichtung (25) einen die Einbringtiefe in den Stutzen (8) begrenzenden Bund (29) aufweist, dass der Bund (29) auf einer Aufnahme (40) auf einer Platine (4) aufsitzt und dass die Aufnahme (40) Ausnehmungen (40-41) aufweist, in denen Sensoren oder Strahler angeordnet sind.

7. Detektorvorrichtung nach Anspruch 6, **dadurch gekennzeichnet, dass** dem Bund (29) unterseitig die Lichtleiter (19,20) einfassende, rohrartige Umhüllungen (36,37) vorstehen.

8. Detektorvorrichtung nach Anspruch 6 oder 7, **dadurch gekennzeichnet, dass** der Aufnahme (40) unterseitige Zapfen (46-48) vorstehen, die in Ausnehmungen der eine Auswerteelektronik aufweisenden Platine (4) eingreifen.

9. Detektorvorrichtung nach einem oder mehreren der vorangehenden Ansprüche 6 bis 8, **dadurch gekennzeichnet, dass** die Aufnahme (40) einen Zylinder (43) aufweist, der zentral die Haltevorrichtung (25) durchsetzt und dass von dem Zylinder (43) ein Sensor unter der Scheibe (9) gehalten wird.

10. Detektorvorrichtung nach einem oder mehreren der vorangehenden Ansprüche, **dadurch gekennzeichnet, dass** die Haltevorrichtung (25) einen zu dem Stutzen (8) achsparallelen Kanal (34) über einem Strahler ausbildet.

11. Detektorvorrichtung nach einem oder mehreren der vorangehenden Ansprüche, **dadurch gekennzeichnet, dass** durch die Verwendung mehrerer Sensoren und/oder Strahler das Spektrum vom Infrarot bis Ultraviolett überwacht wird.

## Claims

1. An optical detector device (1) comprising a housing (2) having a protruding neck (8) which is closed outwardly by a light-permeable pane (9), an optical waveguide arrangement (18)which is configured in one piece being arranged therebelow with a plurality of optical waveguides (19, 20) which are held in the neck (8) by a holding device (25), wherein each optical waveguide tapers toward a different sensor and the optical waveguide arrangement (18)comprises a central ring (21, 54) below the pane (9), wherein the ring (21, 54) is positioned on the holding device (25), the optical waveguides (19, 20)are radially outwardly connected to thering (21, 54) and the holding device encompasses the optical waveguides with an exact fit, in that each optical waveguide (19, 20) is encompassed by bearing surfaces (26 - 28) of cut-outs (38) of the holding device (25) in the peripheral direction and radially internally with an exact fit and is held against the inner wall of the neck (8) over the axial length thereof.

2. The detector device according to Claim 1, **characterised in that** the ring (54) is closed by a central optical waveguide (53).

3. The detector device according to one or more of the preceding claims, **characterised in that** the holding device (25) is configured in one piece.

4. The detector device according to one or more of the preceding claims, **characterised in that** the holding device (25) is non-rotatably and uniquely inserted into the neck (8) and that the optical waveguide arrangement (18) is non-rotatably and uniquely captured in the holding device (25).

5. The detector device according to one or more of the preceding claims, **characterised in that** at least bearing surfaces of the holding device on the optical waveguides are configured to be reflective.

6. The detector device according to one or more of the preceding claims, **characterised in that** the holding device (25)comprises a flange (29) defining the insertion depth in the neck (8), that the flange (29) is positioned on a receiver (40) on a printed circuit board (4) and that the receiver (40)comprisescut-outs (40 - 41) in which sensors or emitters are arranged.

7. The detector device according to Claim 6, **characterised in that** tubular sheaths (36, 37) encompassing the optical waveguides (19, 20) protrude below the lower face of the flange (29).

8. The detector device according to Claim 6 or 7, **characterised in that** pins (46 - 48),which engage in cut-outs of the printed circuit board (4) comprising an electronic evaluation system, protrude below the lower face of thereceiver (40).

9. The detector device according to one or more of the preceding Claims 6 to 8, **characterised in that** the receiver (40)comprises a cylinder (43) which passes centrally through the holding device (25) and that a sensor is held below the pane (9) by the cylinder (43).

10. The detector device according to one or more of the preceding claims, **characterised in that** the holding device (25) forms a channel (34) which is axially parallel to theneck (8) above an emitter.

11. The detector device according to one or more of the preceding claims, **characterised in that** the spectrum from infrared to ultraviolet is monitored by the use of a plurality of sensors and/or emitters.

## Revendications

1. Dispositif de détection optique (1) présentant un boîtier (2) comportant une buse protubérante (8), qui est fermée extérieurement par un disque opaque (9), sous laquelle est disposé un ensemble de fibres optiques monobloc (18) comportant plusieurs fibres optiques (19, 20), qui sont maintenues dans la buse (8) par un dispositif de maintien (25), dans lequel chaque fibre optiqueaboutit à un capteur différent, l'ensemble de fibres optiques (18) présente un anneau central (21, 54)sous le disque (9), dans lequel l'anneau(21, 54) vient reposer sur le dispositif de maintien (25), anneau (21, 54) auquel sont raccordées radialement les fibres optiques (19, 20) et ledispositif de maintien enserre avec précision les fibres optiques, en ce que chaque fibre optique (19, 20) est enserrée avec précision depuis les surfaces de montage (26-28) des cavités (38)du dispositif de maintien (25) dans la direction circonférentielle et radialementà l'intérieuret maintenue contre la paroi interne de labuse (8) sur toute sa longueur axiale.

2. Dispositif de détection selon la revendication 1, **caractérisé en ce que** l'anneau (54) est fermé par une fibre optique centrale (53).

3. Dispositif de détection selon une ou plusieurs des revendications précédentes, **caractérisé en ce que** le dispositif de maintien (25)a une configuration monobloc.

4. Dispositif de détection selon une ou plusieurs des revendications précédentes, **caractérisé en ce que** le dispositif de maintien (25) est inséré dans la buse (8) sans possibilité de rotation et sans équivoque et **en ce que** l'ensemble de fibre optiques (18) est retenu dans le dispositif de maintien (25) sans possibilité de rotation et sans équivoque.

5. Dispositif de détection selon une ou plusieurs des revendications précédentes, **caractérisé en ce que** au moins les surfaces de montage du dispositif de maintien ont une configuration réfléchissante au niveau des fibres optiques.

6. Dispositif de détection selon une ou plusieurs des revendications précédentes, **caractérisé en ce que** le dispositif de maintien (25) présente un collier (29) limitant la profondeur d'insertion dans la buse (8), que le collier (29) vient reposer sur un réceptacle (40) sur une carte de circuit (4) et **en ce que** le réceptacle (40) présente des cavités (40-41), dans lesquelles des capteurs ou des émetteurs de rayonnement sont disposés.

7. Dispositif de détection selon la revendication 6, **caractérisé en ce que** sur la face inférieure du collier (29) dépassent en saillie des enveloppes (36,37) tubulaires, enserrant les fibres optiques (19, 20) .

8. Dispositif de détection selon la revendication 6 ou 7, caractérisé en ceque du réceptacle (40) dépassent en saillie des broches inférieures (46-48), qui s'emboîtent dans les cavités d'une carte de circuit (4) présentant une électronique d'exploitation.

9. Dispositif de détection selon une ou plusieurs des revendications 6 à 8, **caractérisé en ce que** le réceptacle (4) présente un cylindre (43) qui traverse en son centre le dispositif de maintien(25) et **en ce qu'**un capteur est maintenu sous le disque (9) par le cylindre (43).

10. Dispositif de détection selon une ou plusieurs revendications précédentes, **caractérisé en ce que** ledispositif de maintien (25) constitue un canal en parallélisme axial (34) par rapport à la buse (8) au-dessus d'un émetteur de rayonnement.

11. Dispositif de détection selon une ou plusieurs des revendications précédentes, **caractérisée en ce que** plusieurs capteurs et/ou émetteurs de rayonnement sont utilisés pour surveiller le spectre infrarouge à ultraviolet.
